# EUROPÄISCHE PATENTSCHRIFT

(11) **EP 2 045 224 B1**
(45) Veröffentlichungstag und Bekanntmachung des Hinweises auf die Patenterteilung: **18.02.2015**
(21) Anmeldenummer: 08010763.4
(22) Anmeldetag: 13.06.2008
(51) Int. Cl.: C04B 35/573

(54) **Verfahren zum Einbringen von Füllstoffen in flüssiger Form in poröse Körper**
Method for introducing filler materials in liquid form into porous bodies
Procédé d'application d'agents de remplissage sous forme liquide dans des corps poreux

(30) Priorität: 15.09.2007 DE 102007044122
(43) Veröffentlichungstag der Anmeldung: 08.04.2009
(73) Patentinhaber: Audi AG, 85045 Ingolstadt (DE)
(72) Erfinder: Drozny, Adam, 86438 Kissing (DE); Joos, Jürgen, 89191 Nellingen (DE); Stühler, Gregor, 86153 Augsburg (DE)
(74) Vertreter: Asch, Konrad

(56) Entgegenhaltungen:
- EP-A- 1 346 967
- EP-A- 1 860 081
- EP-A- 1 876 158
- DE-U1- 9 422 458
- FR-A- 2 851 244
- GB-A- 2 243 601

## Beschreibung

Die vorliegende Erfindung betrifft ein Verfahren zum Einbringen von Füllstoffen in flüssiger Form in poröse Körper. Insbesondere betrifft sie ein Verfahren, bei dem die flüssigen Füllstoffe nach dem Einbringen in den porösen Körper mit mindestens einem von dessen Bestandteilen reagieren, unter Bildung mindestens einer chemischen Verbindung.

Bei der Herstellung von keramischen Werkstoffen wird häufig durch einen thermischen Verfahrensschritt wie beispielsweise Sintern oder Pyrolyse zunächst ein poröser Körper hergestellt, der anschließend verdichtet wird. Dieses Verdichten kann durch Pressen erfolgen, also ohne Zufügen eines weiteren Stoffes, oder durch einen oder mehrere Infiltrier- oder Imprägnierschritte, wobei das Infiltriermittel unverändert bleiben kann und lediglich die (offenen oder zugänglichen) Poren zumindest teilweise ausfüllt, oder das Infiltriermittel mindestens zu einem Teil mit mindestens einem der Bestandteile des porösen Körpers reagiert unter Bildung mindestens einer chemischen Verbindung.

Ein Feld, bei dem ein derartiges Verfahren technische Bedeutung gewonnen hat, ist die Herstellung von keramischen Werkstoffen auf der Basis von Siliciumcarbid, wobei zunächst ein poröser Kohlenstoff-Körper hergestellt wird, der anschließend durch Reaktion mit flüssigem Silicium oder einer Silicium enthaltenden Schmelze unter weitgehendem Erhalt der geometrischen Form und der Abmessungen (sogenanntes "near net shape-Verfahren") des Kohlenstoff-Körpers zu einem Körper umgewandelt wird, der zu einem wesentlichen Teil aus dem durch die Reaktion von Kohlenstoff und Silicium gebildeten Siliciumcarbid besteht. Bei den üblicherweise angewendeten Temperaturen oberhalb der Schmelztemperatur von Silicium bis zu ca. 1700 °C bildet sich die bei diesen Temperaturen stabile beta-Modifikation des Siliciumcarbids.

Es sind verschiedene Wege bekannt, flüssiges Silicium in poröse, Kohlenstoff enthaltende Körper einzubringen.

Aus der Patentanmeldung FR 2 851 244 A ist bekannt, einen Docht mit einem Ende in ein Sackloch in den zu infiltrierenden Körper einzuführen und das andere Ende mit einem Reservoir mit flüssigem Silicium zu verbinden. In der Patentanmeldung EP 1 876 159 A1 ist beschrieben, einen Verbund aus Kohlenstoffkörpern in der Gestalt einer Schokoladentafel zu keramisieren, indem Dochte beim Warmpressen des Vorkörpers zu dem erstgenannten Verbund in den Vorkörper miteingepresst werden. In dem Gebrauchsmuster DE 94 22 458 U1 ist eine Reibeinheit beschrieben, die Hohlräume im Inneren aufweist, wobei diese durch Kerne aus den Werkstoffen Gummi, Kunststoff, Metall, Keramik oder Kohlenstoff gebildet werden, die in einen Kohlenstoffaserkörper im Laufe von dessen Herstellung vor der Formgebung an den für Hohlräume vorgesehenen Stellen eingebracht werden. Aus der Patentanmeldung GB 2 243 601 A ist ein Verfahren zum Einleiten von geschmolzenem Silicium in einen porösen Siliciumcarbid-Körper bekannt, bei dem an den Körper ein Anguß ("sprue") angeformt wird, der als Zuführungsweg für das geschmolzene Silicium dient. Die nicht vorveröffentlichte Patentanmeldung EP 1 860 081 A1 betrifft ein Verfahren zur Herstellung von keramischen Werkstoffen auf Basis von Siliciumcarbid, bei dem porösen Körper aus Kohlenstoff mit als Reservoir dienenden nach unten hin verschlossenen zugänglichen Hohlräumen mit geschmolzenem Silicium infiltriert werden.

Aus dem Patent US 5,432,253 ist bekannt, den zu imprägnierenden porösen Körper gemeinsam mit Silicium in stückiger Form auf ein Kohlenstoff-Tuch (Gewebe oder Filz) zu stellen, und alles gemeinsam auf die Infiltrationstemperatur aufzuheizen, also eine Temperatur, bei der das Silicium schmelzflüssig ist und eine genügend geringe Viskosität aufweist, um über das Tuch in den porösen Körper einzudringen und sich in diesem zu verteilen.

Eine andere Methode ist aus dem US-Patent 4,626,516 bekannt, bei dem eine Form mit Infiltrationslöchern und einem Reservoir mit elementarem Silicium benutzt wird; ein poröser Körper wird in die Form gebracht, und die Löcher werden mit Dochten aus Kohlenstoff versehen, wobei die Dochte mit dem porösen Körper und dem Reservoir in Kontakt sind. Bei der Arbeitstemperatur oberhalb der Schmelztemperatur des Silicium migriert das Silicium durch die Dochte in den porösen Körper.

Aus dem US-Patent 4,737,328 ist bekannt, einen porösen Körper mit einer Pulvermischung aus Silicium und Bornitrid zu bedecken, und die Anordnung über die Schmelztemperatur des Siliciums aufzuheizen, wobei dieses in den Körper eindringt, und das Bornitridpulver anschließend abzubürsten. Ein weiteres Verfahren ist das Bedecken eines porösen Kohlenstoff-Körpers mit einer formbaren und härtbaren Masse aus Silicium-Pulver und einem Bindemittel, gemäß der Patentanmeldung WO1982/04248 oder der Patentanmeldung EP 0 995 730 A1. Dabei soll der Vorteil sein, dass Silicium genau in der erforderlichen Menge zugeführt wird. Schließlich ist aus der Patentanmeldung DE 102 12 043 bekannt, den mit Silicium zu infiltrierenden Gegenstand auf Dochte aus carbonisiertem Holz zu stellen, wobei diese Dochte mit ihrem unteren Ende in eine Metallschmelze eintauchen.

Das all diesen Verfahren gemeinsame Problem ist, dass die Silicium-Schmelze stets von der Oberfläche des zu infiltrierenden Körpers aus zugeführt wird. Dabei ist in der Umgebung der Eintrittsstelle stets ein großer Überschuss an Silicium vorhanden, während in die weiter entfernten Regionen deutlich weniger Silicium transportiert wird. Bei einer flächigen Zufuhr wie in den Anmeldungen WO 1982/04248 oder EP 0 995 730 A1 wird zwar über die gesamte bedeckte Oberfläche flüssiges Silicium zugeführt, es ergibt sich jedoch ein Gradient über die Dicke des zu infiltrierenden Körpers. Derartige Gradienten führen zu Inhomogenität in den infiltrierten und gegebenenfalls reagierten Körpern, die insbesondere bei schnell drehenden Teilen wie Bremsscheiben oder Kupplungsscheiben zu nicht tolerierbarer Unwucht Anlass gibt.

Es ist daher die Aufgabe der vorliegenden Erfindung, ein Verfahren anzugeben, das zu einer symmetrischen und weitgehend homogenen Verteilung des Infiltriermittels führt, ohne dass der Prozess dadurch in unzumutbarer Weise kompliziert wird. Die Lösung der Aufgabe ergibt sich durch ein Verfahren gemäß Anspruch 1. Bevorzugte Ausführungsformen sind in den Unteransprüchen beschrieben.

Die Erfindung betrifft daher ein Verfahren zum Einbringen von Füllstoffen in scheibenförmige oder ringscheibenförmige poröse Körper, bei dem die Füllstoffe in flüssiger Form über mindestens einen Docht mit den porösen Körpern in Kontakt gebracht werden und sich von mindestens einer Stelle im Inneren des porösen Körpers aus in diesem porösen Körper verteilen, wobei Sacklöcher mit abgestuftem Durchmesser in die scheibenförmigen oder ringscheibenförmigen porösen Körper gebohrt werden, und die Sacklöcher aus einer Bohrung mit größerem Durchmesser und einer Bohrung mit kleinerem Durchmesser gebildet werden, und wobei in den Bereich der Bohrung mit größerem Durchmesser dieser Sacklöcher bündig oder mit Spiel passende vorzugsweise zylinderförmige Dochte aus porösem Kohlenstoff eingesteckt werden. Dabei ist es bevorzugt, dass die Füllstoffe mit mindestens einem Bestandteil des porösen Körpers unter Bildung einer chemischen Verbindung reagieren. Dabei werden die Füllstoffe über den mindestens einen Docht in das Innere des porösen Körpers transportiert, und diffundieren von dem in dem porösen Körper gelegenen Ende eines Dochts in den porösen Körper.

Besonders gute Resultate werden erhalten, wenn die Füllstoffe in flüssiger Form an mehr als eine Stelle im Inneren des porösen Körpers eingebracht werden, und die Einbringungsstellen symmetrisch angeordnet werden. Die Einbringungsstellen werden als Sacklöcher ausgeführt, wobei im Fall von bündig passenden Dochten ein Docht in ein Sackloch gesteckt oder im Fall von geringem Spiel zwischen Docht und Sackloch der Docht in dem Sackloch bevorzugt durch geeignete Mittel befestigt wird, beispielsweise durch Kleben.

In bevorzugter Weise enthält der poröse Körper Kohlenstoff in Form von Fasern oder Faserbündeln oder textilen Gebilden sowie weiteren Kohlenstoff in Form einer porösen Matrix. Dabei reagiert der flüssige Füllstoff mit dem Kohlenstoff des porösen Körpers mindestens teilweise zu Carbiden. Zur Bildung von keramischen Teilen mit einer Matrix, die Siliciumcarbid enthält, wird als Infiltriermittel eine Silicium enthaltende Schmelze verwendet, wobei der poröse Körper Kohlenstoff enthält. Dabei bildet sich durch Reaktion des Silicium enthaltenden Infiltriermittels mit dem Kohlenstoff des porösen Körpers Siliciumcarbid. Neben Silicium können auch andere Elemente wie Eisen, Kobalt, Nickel, Titan, Bor, Aluminium, Chrom, Mangan, Molybdän, Wolfram, in dem Infiltriermittel enthalten sein, bevorzugt solche, die mit Silicium eine homogene Schmelze bilden.

Die Sacklöcher mit abgestuftem Durchmesser werden bevorzugt zentrosymmetrisch bezüglich ihrer Lage um die Drehachse des porösen Körpers angeordnet.

Die Erfindung wird die nachfolgenden Zeichnungen erläutert.

Dabei zeigen die
- Fig. 1: eine Draufsicht auf die untere Begrenzungsebene eines ringscheibenförmigen Körpers für eine Bremsscheibe mit Perforationsbohrungen,
- Fig. 2: einen Ausschnitt aus Fig. 1, in dem die abgestufte Form des Sacklochs zu erkennen ist,
- Fig. 3: einen Schnitt durch einen Teil eines ringscheibenförmigen Körpers mit einem Sackloch und einem eingesteckten Docht.

Die Photographien zeigen in
- Fig. 4: einen Schnitt durch eine silicierte Ringscheibe, wobei eine nicht ausreichende Menge an Silicium von der unteren Oberfläche aus durch Aufstellen auf poröse Dochte infiltriert wurde, und die Infiltration danach abgebrochen wurde, und der teilweise silicierte Körper aufgesägt und photographiert wurde, und
- Fig. 5: einen Schnitt durch eine nach dem erfindungsgemäßen Verfahren infiltrierte geometrisch identische Ringscheibe, wobei eine nicht ausreichende Menge an Silicium von einer Sacklochbohrung mit eingestecktem porösem Docht aus infiltriert wurde, und die Infiltration danach abgebrochen wurde, und der teilweise silicierte Körper aufgesägt und photographiert wurde.

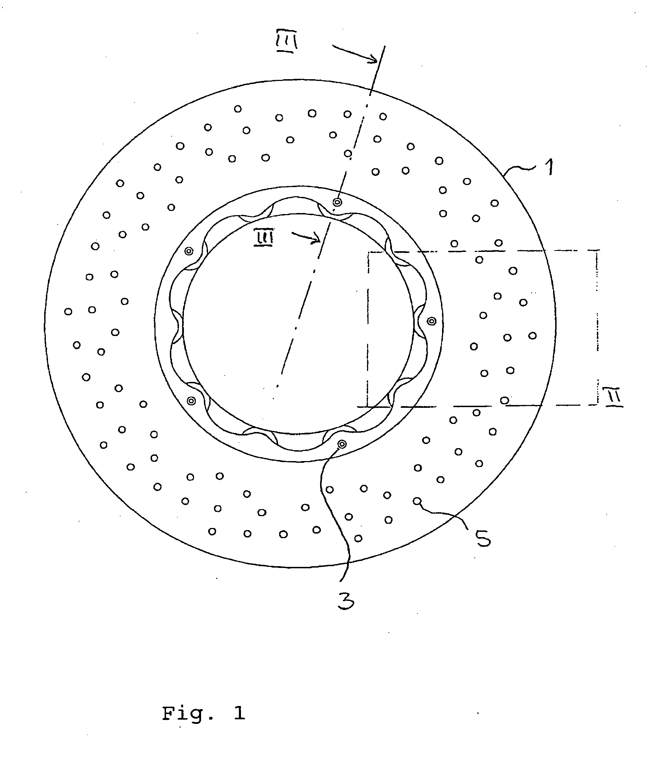

Die Fig. 1 zeigt eine Draufsicht auf eine Ringscheibe 1 von der mit Sacklöchern 3 ausgerüsteten Seite der Ringscheibe 1 aus, wobei in dieser Ausführungsform fünf Sacklöcher nahe dem inneren Umfang der Ringscheibe 1 und jeweils um 72° versetzt angeordnet sind. Über die Ringscheibenfläche sind Perforationsbohrungen 5 verteilt.

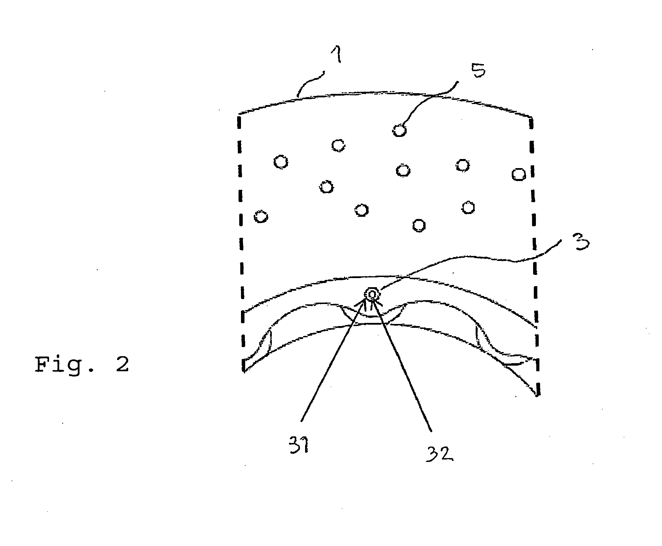

Die Fig. 2 zeigt einen Ausschnitt aus dieser Draufsicht, wobei ein Sackloch vergößert dargestellt ist. Sowohl die Bohrung 31 mit größerem Durchmesser als auch die Bohrung 32 mit geringerem Durchmesser sind von oben zu erkennen. Die Perforationsbohrungen durch die Ringscheibe sind mit 5 bezeichnet.

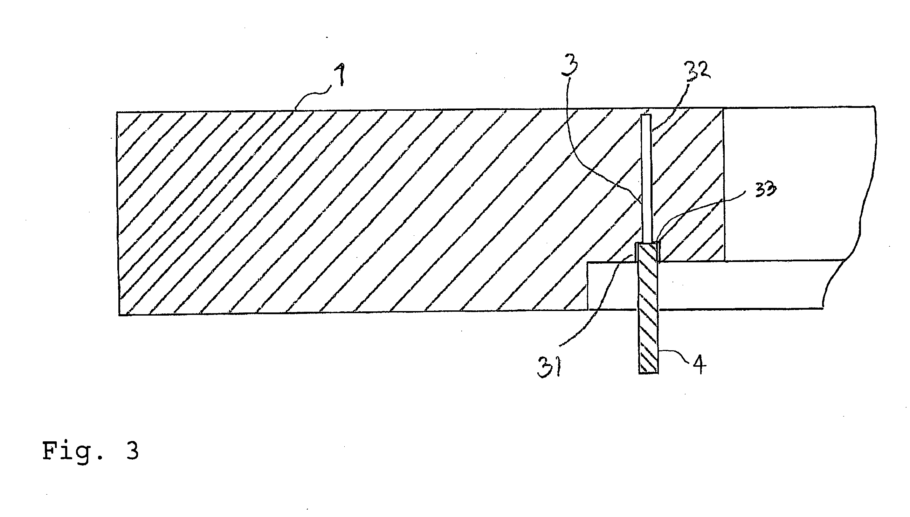

In der Fig. 3 ist ein Schnitt durch die Ringscheibe 1 längs der Ebene, die durch die Rotations-Achse der Ringscheibe 1 und die Strecke III-III aufgespannt wird, dargestellt. Im rechten Teil der Abbildung ist ein Sackloch 3 zu sehen, in das ein Docht 4 eingesteckt ist. Aufgrund der Orientierung der Poren, die im Fall von Dochten aus carbonisiertem Holz bevorzugt in der Längsachse der Dochte 4 entsprechend der gewählten Vorzugsorientierung bei der Herstellung der Dochte 4 ausgerichtet sind, und die im Fall von Dochten 4 enthaltend Bündel von Fasern aus Kohlenstoff gemäß der oben erläuterten Vorzugsorientierung der Faserbündel ebenfalls bevorzugt parallel zur Dochtachse ausgerichtet sind, ist die bevorzugte Eintrittsregion des flüssigen Silicium in die zu infiltrierenden Ringscheibe durch die Stufe 33 in dem Sackloch 3 beim Übergang von der Bohrung 31 mit dem größeren Durchmesser zur Bohrung 32 mit dem kleineren Durchmesser des Sacklochs 3 gebildet.

In bevorzugter Weise enden die Sacklöcher 3 ca. 1,5 mm bis ca. 4 mm, besonders bevorzugt 1,8 mm bis 3 mm, von der der Bohrung gegenüberliegenden Oberfläche der Ringscheibe entfernt; ihr Durchmesser im Bereich der Bohrung 32 mit geringerem Durchmesser beträgt bevorzugt 2 mm bis 4,5 mm, und besonders bevorzugt 2,5 mm bis 4 mm. Im Bereich der durchbohrten Oberfläche beträgt der Durchmesser der Bohrung 31 bevorzugt mindestens das zweifache des Durchmessers im engeren Teil; günstige Werte sind von 4 mm bis 10 mm. Dabei beträgt die Tiefe des Bereichs der Bohrung 31 des Sacklochs mit größerem Durchmesser bevorzugt mindestens 3 mm und bevorzugt nicht mehr als 10 mm oder 25 % der Dicke des Bauteils an dieser Stelle. Die bevorzugte Länge des Bereichs der Bohrung 32 mit dem geringeren Durchmesser ergibt sich rechnerisch aus den genannten Vorzugsbereichen für die Tiefe des Sacklochs 3 und der Tiefe des Bereichs der Bohrung 31.

In den Bereich der Bohrung 31 der Sacklöcher mit größerem Durchmesser werden mit geringem Spiel, vorzugsweise von 0,05 mm bis zu 0,2 mm, passende vorzugsweise zylinderförmige Dochte 4 bevorzugt aus porösem Kohlenstoff eingesteckt. Bei geringem Spiel ist Einstecken der Dochte in die Bohrung 31 ausreichend, im Fall größeren Spiels ist ein Befestigen beispielsweise durch Kleben bevorzugt. Besonders bevorzugt sind Dochte aus carbonisiertem Holz oder mit Fasern aus Kohlenstoff verstärktem porösen Kohlenstoff, wobei besonders solche Dochte bevorzugt sind, die parallel gelegte Rovingbündel in zylindrischer Form enthalten, die durch carbonisierbare Bindemittel wie Phenolharze oder Peche oder deren Mischungen gebunden sind, wobei vor der Verwendung diese Bindemittel durch Erhitzen unter Sauerstoffausschluss auf Temperaturen von ca. 750 °C bis 1300 °C carbonisiert wurden.

Das durch den Docht 4 eindiffundierende Infiltriermittel, bevorzugt Silicium oder eine dies enthaltende Schmelze, verteilt sich im Bereich der Bohrung 32 und füllt diese bei Einhaltung der Durchmesser wie oben genannt in dieser Bohrung, von diesem Reservoir aus kann das Infiltriermittel senkrecht zur Rotations-Achse der Ringscheibe in das Innere der Ringscheibe diffundieren und bewirkt bei der vorzugsweisen Orientierung von Verstärkungsfasern in dem bevorzugterweise die Ringscheibe bildenden porösen Kohlenstoff-Körper in der Ebene der Ringscheibe, also senkrecht zur Rotations-Achse, ein gleichmäßiges Vorrücken der Front des Infiltriermittels von dem Bereich der Bohrung 32 aus.

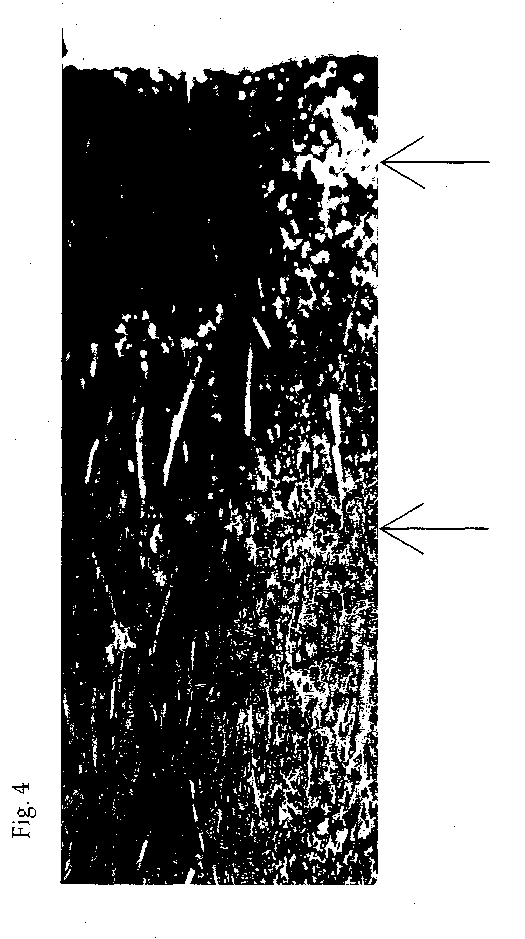

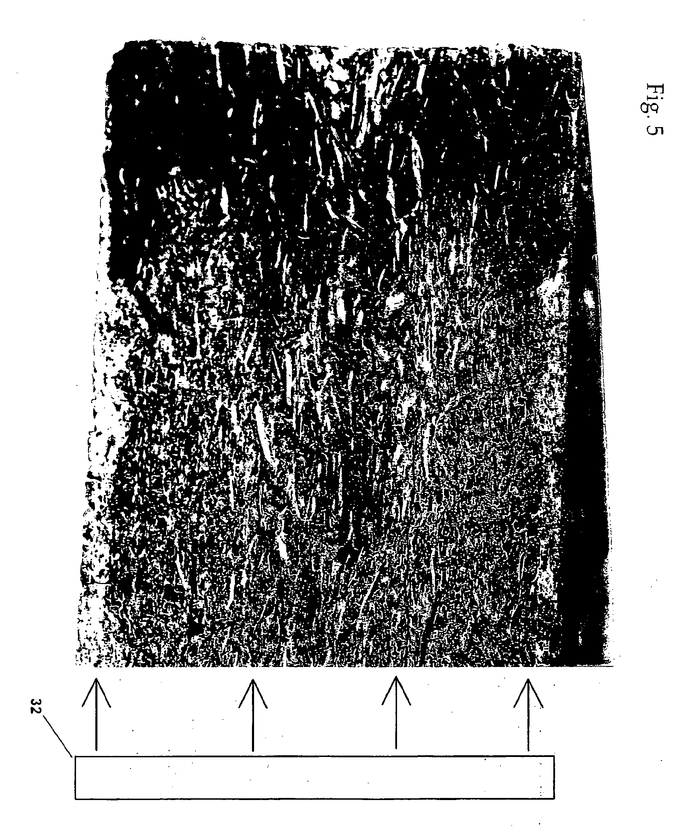

Der durch die Erfindung erreichte Vorteil der gleichmäßigen Infiltrierung wird durch die Photographien Fig. 4 und Fig. 5 gezeigt, wobei in der Fig. 4 die Zuführung von flüssigem Silicium bei 1500 °C und einem Druck von ca. 5 hPa im Unterschuss durch hier nicht dargestellte Dochte, die nach der partiellen Silicierung von der Ringscheibe entfernt wurden, von der Unterseite des Ringscheibe her erfolgte; die Stellen der Dochte sind durch Pfeile markiert. Das Silicium ist in Form von weißen Flecken in der Photographie zu erkennen. Es ist zu erkennen, dass die Diffusion in Richtung der Front, also hier von unten im Bild nach oben, sehr ungleichmäßig erfolgt; auch ist die Diffusion in horizontaler Richtung schneller als in vertikaler Richtung. Die Orientierung der Verstärkungsfasern ist horizontal, wie im Bild zu erkennen, diese Orientierung ist wegen der erforderlichen Festigkeit der Ringscheibe bedingt.

In der Fig. 5 ist eine aufgesägte Ringscheibe dargestellt, bei der die Zuführung des Infiltriermittels Silicium von der Zone der Bohrung 32 her in horizontaler Richtung (Pfeilrichtung) im Bild gesehen her erfolgte, die gleichmäßige Fließfront des Silicium in der mit Verstärkungsfasern in horizontaler Richtung versehenen Ringscheibe und das in der Photographie grau abgebildete Siliciumcarbid sind deutlich zu erkennen. Es wurde dieselbe Menge an Silicium (bestimmt durch Wägung) bei ansonsten gleichen Bedingungen in eine Ringscheibe mit gleicher Geometrie infiltriert wir bei dem in Fig. 4 dargestellten Beispiel mit Infiltrierung von der Unterfläche der Ringscheibe aus. Die Infiltrierung erfolgt schneller und gleichmäßiger als im in Fig. 4 dargestellten Beispiel.

## Patentansprüche

1. Verfahren zum Einbringen von Füllstoffen in scheibenförmige oder ringscheibenförmige poröse Körper, bei dem die Füllstoffe in flüssiger Form über mindestens einen Docht mit den porösen Körpern in Kontakt gebracht werden und sich von mindestens einer Stelle im Inneren des porösen Körpers aus in diesem porösen Körper verteilen, **dadurch gekennzeichnet, dass** Sacklöcher (3) mit abgestuftem Durchmesser in die scheibenförmigen oder ringscheibenförmigen porösen Körper (1) gebohrt werden, wobei die Sacklöcher aus einer Bohrung (31) mit größerem Durchmesser und einer Bohrung (32) mit kleinerem Durchmesser gebildet werden, und wobei in den Bereich der Bohrung (31) mit größerem Durchmesser dieser Sacklöcher (3) bündig oder mit Spiel passende vorzugsweise zylinderförmige Dochte (4) aus porösem Kohlenstoff eingesteckt werden.

2. Verfahren nach Anspruch 1, **dadurch gekennzeichnet, dass** die Füllstoffe mit mindestens einem Bestandteil des porösen Körpers unter Bildung einer chemischen Verbindung reagieren.

3. Verfahren nach Anspruch 1, **dadurch gekennzeichnet, dass** die Füllstoffe über mindestens einen Docht in das Innere des porösen Körpers transportiert werden und von dem in dem porösen Körper gelegenen Ende eines Dochts in den porösen Körper diffundieren.

4. Verfahren nach einem oder mehreren der Ansprüche 1 bis 3, **dadurch gekennzeichnet, dass** der poröse Körper Kohlenstoff enthält.

5. Verfahren nach Anspruch 4, **dadurch gekennzeichnet, dass** der poröse Körper Kohlenstoff in Form von Fasern oder Faserbündeln oder textilen Gebilden sowie weiteren Kohlenstoff in Form einer porösen Matrix enthält.

6. Verfahren nach Anspruch 4, **dadurch gekennzeichnet, dass** der flüssige Füllstoff mit dem Kohlenstoff des porösen Körpers mindestens teilweise zu Carbiden reagiert.

7. Verfahren nach Anspruch 1, **dadurch gekennzeichnet, dass** der flüssige Füllstoff Silicium enthält.

8. Verfahren nach Anspruch 1, **dadurch gekennzeichnet, dass** die Sacklöcher (3) in ringscheibenförmigen porösen Körpern zentrosymmetrisch bezüglich ihrer Lage um die Drehachse angeordnet werden.

9. Verfahren nach Anspruch 1, **dadurch gekennzeichnet, dass** die Sacklöcher (3) ca. 1,5 mm bis ca. 4 mm, besonders bevorzugt 1,8 mm bis 3 mm, von der der Bohrung gegenüberliegenden Oberfläche der Ringscheibe entfernt enden und ihr Durchmesser im Bereich der Bohrung (32) mit geringerem Durchmesser 2 mm bis 4,5 mm beträgt, und im Bereich der durchbohrten Oberfläche der Ringscheibe der Durchmesser der Bohrung (31) mindestens das zweifache des Durchmessers im engeren Teil beträgt, und die Tiefe des Bereichs der Bohrung (31) des Sacklochs mit größerem Durchmesser mindestens 3 mm und nicht mehr als 10 mm oder 25 % der Dicke des Bauteils an dieser Stelle beträgt.

10. Verfahren nach Anspruch 1, **dadurch gekennzeichnet, dass** Dochte aus carbonisiertem Holz oder mit Fasern aus Kohlenstoff verstärktem porösen Kohlenstoff verwendet werden, besonders solche Dochte, die parallel gelegte Rovingbündel in zylindrischer Form enthalten, die durch carbonisierbare Bindemittel gebunden sind, wobei vor der Verwendung diese Bindemittel durch Erhitzen unter Sauerstoffausschluss auf Temperaturen von ca. 750°C bis 1300°C carbonisiert werden.

## Claims

1. Method for introducing fillers into discoid or annular-disc-shaped porous bodies, in which the fillers, in a fluid state, are brought into contact with the porous bodies by means of at least one wick and distribute themselves in said porous body starting from at least one point inside the porous body, **characterised in that** blind holes (3) having stepped diameters are drilled into the discoid or annular-disc-shaped porous bodies (1), the blind holes being formed of a drilled hole (31) having a relatively large diameter and a drilled hole (32) having a relatively small diameter, and preferably cylindrical wicks (4) made of porous carbon being inserted, so as to be flush or so as to fit with play, into the region of the drilled hole (31), having the relatively large diameter, of said blind holes (3).

2. Method according to claim 1, **characterised in that** the fillers react with at least one component of the porous body, forming a chemical connection.

3. Method according to claim 1, **characterised in that** fillers are transported into the interior of the porous body by means of at least one wick, and diffuse into the porous body from the end, located in the porous body, of a wick.

4. Method according to one or more of claims 1 to 3, **characterised in that** the porous body contains carbon.

5. Method according to claim 4, **characterised in that** the porous body contains carbon in the form of fibres or fibre bundles or textile structures, and additional carbon in the form of a porous matrix.

6. Method according to claim 4, **characterised in that** at least some of the liquid filler reacts with the carbon of the porous body to form carbides.

7. Method according to claim 1, **characterised in that** the liquid filler contains silicon.

8. Method according to claim 1, **characterised in that** the blind holes (3) are arranged in annular-disc-shaped porous bodies so as to be centrosymmetrical relative to their position about the axis of rotation.

9. Method according to claim 1, **characterised in that** the blind holes (3) end from approximately 1.5 mm to approximately 4 mm, most preferably from 1.8 mm to 3 mm, away from the surface of the annular disc that is opposite the drilled hole, and their diameter in the region of the drilled hole (32) having the relatively small diameter is from 2 mm to 4.5 mm and, in the region of the drilled surface of the annular disc, the diameter of the drilled hole (31) is at least double the diameter in the relatively narrow part, and the depth of the region of the drilled hole (31), having the relatively large diameter, of the blind hole is at least 3 mm and no more than 10 mm or 25 % of the thickness of the component at this location.

10. Method according to claim 1, **characterised in that** wicks made of carbonised wood or having fibres made of carbon-reinforced, porous carbon are used, in particular those wicks which contain cylindrical roving bundles which are positioned in parallel and are bound by carbonisable binders, said binders being carbonised, prior to use, by heating in the absence of oxygen to temperatures of from approximately 750 °C to 1300 °C.

## Revendications

1. Procédé d'application de charges dans des corps poreux en forme de disque ou de disque annulaire, dans lequel les charges sont amenées en contact avec les corps poreux sous forme liquide via au moins une mèche et se dispersent à partir d'au moins un point à l'intérieur du corps poreux dans celui-ci, **caractérisé en ce que** des trous borgnes (3) de diamètre étagé sont ménagés dans les corps poreux (1) en forme de disque ou de disque annulaire, dans lequel les trous borgnes sont formés d'un perçage (31) de plus grand diamètre et d'un perçage (32) de plus petit diamètre et dans lequel sont enfichées dans la zone du perçage (31) de plus grand diamètre des mèches (4) de carbone poreux, de préférence de forme cylindrique, s'adaptant à fleur ou avec un certain jeu à ces trous borgnes (3).

2. Procédé selon la revendication 1, **caractérisé en ce que** les charges réagissent avec au moins un composant du corps poreux en formant un composé chimique.

3. Procédé selon la revendication 1, **caractérisé en ce que** les charges sont transportées via au moins une mèche dans l'intérieur du corps poreux et diffusent de l'extrémité d'une mèche située dans le corps poreux dans celui-ci.

4. Procédé selon une ou plusieurs des revendications 1 à 3, **caractérisé en ce que** le corps poreux contient du carbone.

5. Procédé selon la revendication 4, **caractérisé en ce que** le corps poreux contient du carbone sous la forme de fibres ou de faisceaux de fibres ou de produits textiles ainsi que du carbone sous la forme d'une matrice poreuse.

6. Procédé selon la revendication 4, **caractérisé en ce que** la charge liquide réagit avec le carbone du corps poreux au moins en partie pour produire des carbures.

7. Procédé selon la revendication 1, **caractérisé en ce que** la charge liquide contient du silicium.

8. Procédé selon la revendication 1, **caractérisé en ce que** les trous borgnes (3) sont ménagés dans des corps poreux en forme de disque annulaire sur la base d'une symétrie centrale par rapport à leur position autour de l'axe de rotation.

9. Procédé selon la revendication 1, **caractérisé en ce que** les trous borgnes (3) se terminent à distance d'environ 1,5 mm à environ 4 mm, tout particulièrement de 1,8 mm à 3 mm, de la surface du disque annulaire opposée au perçage et leur diamètre atteint 2 mm à 4,5 mm dans la zone du perçage (32) de plus petit diamètre et, dans la zone de la surface perforée du disque annulaire, le diamètre du perçage (31) atteint au moins le double du diamètre dans la zone plus étroite, et la profondeur de la zone du perçage (31) du trou borgne dans la zone de plus grand diamètre atteint au moins 3 mm et pas plus de 10 mm ou 25 % de l'épaisseur du composant en ce point.

10. Procédé selon la revendication 1, **caractérisé en ce que** l'on utilise des mèches de bois carbonisé ou en carbone poreux renforcé de fibres de carbone, en particulier des mèches qui contiennent des faisceaux de stratifil appliqués parallèlement sous forme cylindrique, qui sont liés par des liants carbonisables, dans lequel, avant utilisation, ces liants sont carbonisés par chauffage en l'absence d'oxygène à des températures d'environ 750 °C à 1300 °C.
